# EUROPEAN PATENT APPLICATION

(11) **EP 2 982 771 A1**
(43) Date of publication of application: **10.02.2016**
(21) Application number: 14771752.4
(22) Date of filing: 04.04.2014
(51) Int. Cl.: C22C 38/00, B21K 1/44, C21D 1/02

(54) **METHOD FOR MANUFACTURING HIGH-STRENGTH BOLT HAVING EXCELLENT TENSILE STRENGTH**

(30) Priority: 05.04.2013 KR 20130037750
(71) Applicant: Taeyang Metal Industrial Co., Ltd., Ansan-si, Gyeonggi-do 425-833 (KR)
(72) Inventor: LEE, Youhwan, Pohang-si Gyeongsangbuk-do 790-834 (KR); AHN, Hakgi, Ansan-si Gyeonggi-do 425-833 (KR); HAHN, Howard Sung, Ansan-si Gyeonggi-do 425-833 (KR)
(74) Representative: Taor, Simon Edward William
(86) International application number: PCT/KR2014/002931
(87) International publication number: WO 2014/163431

(57) **Abstract**

Provided is a method of manufacturing a high-strength bolt including forming an alloy wire rod in the shape of a bolt, which has a two-phase structure of ferrite-pearlite and includes 0.3 wt% to 0.4 wt% of carbon (C), 0.1 wt% or less of silicon (Si), 0.4 wt% to 0.6 wt% of manganese (Mn), 0.9 wt% to 1.1 wt% of chromium (Cr), 0.2 wt% to 0.5 wt% of molybdenum (Mo), 0.05 wt% to 0.15 wt% of vanadium (V), 0.02 wt% to 0.05 wt% of aluminum (Al), 0.2 wt% to 0.5 wt% of nickel (Ni), 0.015 wt% or less of phosphorous (P), 0.015 wt% or less of sulfur (S), 0.1 wt% or less of copper (Cu), 0.01 wt% to 0.05 wt% of titanium (Ti), 0.001 wt% to 0.005 wt% of boron (B), 0.005 wt% to 0.020 wt% of nitrogen (N), 0.005 wt% or less of oxygen (O), and iron (Fe) as well as other unavoidable impurities as a remainder, performing a first heat treatment on the formed bolt in a temperature range of Ae3+20°C to Ae3+120°C, cooling the heat-treated bolt at a cooling rate of 200°C/s to 400°C/s, and performing a second heat treatment on the cooled bolt in a temperature range of 400°C to 500°C, wherein the second heat-treated bolt has a tempered martensite structure and a carbide structure including at least one selected from the group consisting of V, Ti, and Fe.

## Description

The present invention relates to a method of manufacturing a high-strength bolt required for vehicles and mechanical structures and devices, and more particularly, to a method of manufacturing a specific part, such as a bolt, in which a cold heading quality wire rod is subjected to austenitizing, quenching, and tempering conditions that are proposed in the present invention and other general manufacturing processes for manufacturing a bolt.

### BACKGROUND ART

The demand for the manufacture of high-strength fastening components, such as bolts for fastening steel structures, wind power facilities, and machine structural parts as well as transportation equipment such as vehicles, ships, and airplanes, has been continuously increased. The basic reason for this is that there are various advantages that are obtained using a bolt having higher strength than a typical bolt.

For example, when a high-strength bolt is used in a car, the size and weight thereof may be reduced to reduce the weight of parts and the turning radius and driving area of parts driven in relation to the lightweight parts. Eventually, weight reductions in automotive bodies and the improvement of fuel economy may be realized. Similarly, with respect to bolts used in construction or building structures, the number of bolts required for a joining member may be reduced by high-strengthening of the bolt, and the number of fastening holes that must be prepared in advance in the joining member may be reduced. Thus, the reduction of the term of works and costs may be obtained. Also, seismic performance may be improved by using high-strength bolts.

For such purposes, a plurality of methods has been proposed in relation to a method of manufacturing a high-strength bolt, and many efforts have been conducted for manufacturing a high-strength bolt by selecting an alloy composition of a cold heading quality wire rod as an intermediate workpiece and performing subsequent heat treatments under various conditions. A bolt manufactured by typical heat treatments may be subjected to a series of processes such as drawing and spheroidization of a cold heading quality wire rod, cold forging, thread rolling, austenitizing, quenching, and tempering. Among them, the selection of an alloy composition is a very important issue. However, the issue may not be addressed only by the simple addition of alloying elements, and appropriate combination and selection of various alloying elements may be very important. The drawing and spheroidization processes are independent of the characteristics of a material and simply produce the material in the form of facilitating the cold forging. The cold forging and thread rolling produce the shape of a bolt. The final quenching and tempering are very important processes for determining tensile strength and other mechanical properties of a bolt. Thus, when the above-described processes are not appropriately performed, an actually usable bolt as well as a high-strength bolt may not be manufactured.

Therefore, appropriate selections of a cold heading quality wire rod having an alloy composition suitable for forming the shape of a high-strength bolt and quenching and tempering processes applied after the shape forming are very important, and there is a need to develop a technique of devising and improving an effective method related to the above descriptions.

### DISCLOSURE OF THE INVENTION

### TECHNICAL PROBLEM

The present invention provides an effective method related to an alloy composition and heat treatments in manufacturing the above-described high-strength bolt, wherein tensile strength performance of the high-strength bolt is improved by deducing heat treatment conditions, under which stable mechanical properties may be obtained, as well as an optimum alloy composition.

### TECHNICAL SOLUTION

According to an aspect of the present invention, there is provided a method of manufacturing a high-strength bolt including: forming an alloy wire rod, which has a two-phase structure of ferrite-pearlite and includes 0.3 wt% to 0.4 wt% of carbon (C), 0.1 wt% or less of silicon (Si), 0.4 wt% to 0.6 wt% of manganese (Mn), 0.9 wt% to 1.1 wt% of chromium (Cr), 0.2 wt% to 0.5 wt% of molybdenum (Mo), 0.05 wt% to 0.15 wt% of vanadium (V), 0.02 wt% to 0.05 wt% of aluminum (Al), 0.2 wt% to 0.5 wt% of nickel (Ni), 0.015 wt% or less of phosphorous (P), 0.015 wt% or less of sulfur (S), 0.1 wt% or less of copper (Cu), 0.01 wt% to 0.05 wt% of titanium (Ti), 0.001 wt% to 0.005 wt% of boron (B), 0.005 wt% to 0.020 wt% of nitrogen (N), 0.005 wt% or less of oxygen (O), and iron (Fe) as well as other unavoidable impurities as a remainder, in a shape of a bolt; performing a first heat treatment on the formed bolt in a temperature range of Ae3+20°C to Ae3+120°C; cooling the heat-treated bolt at a cooling rate of 200°C/s to 400°C/s; and performing a second heat treatment on the cooled bolt in a temperature range of 400°C to 500°C, wherein the second heat-treated bolt has a tempered martensite structure and a carbide structure including at least one selected from the group consisting of V, Ti, and Fe.

The first heat treatment may be performed for 0.5 hours to 1.5 hours.

The second heat treatment may be performed for 0.5 hours to 1.5 hours.

The cooling may be performed by an oil cooling method.

The method may further include air cooling the second heat treated bolt.

An area fraction of the tempered martensite structure may be 98% or more.

An average particle diameter of the carbide structure including at least one selected from the group consisting of V, Ti, and Fe may be in a range of 0.1 µm to 1 µm.

### ADVANTAGEOUS EFFECTS

According to the present invention, a bolt having high strength and stable microstructure may be manufactured by efficiently heat treating a cold heading quality wire rod having a designed alloy composition.

Also, according to the present invention, a bolt having improved fastening force and fatigue life, i.e., major required characteristics of a bolt, may be manufactured.

Furthermore, according to the present invention, a bolt having high strength and stable microstructure, which may be suitable for fastening parts in vehicles and machine structures, may be manufactured.

### BRIEF DESCRIPTION OF THE DRAWINGS

FIG. 1 is a flowchart illustrating a method of manufacturing a high-strength bolt having excellent tensile strength according to the present invention;
FIG. 2 illustrates an example of a structure of a bolt manufactured according to the method of manufacturing a high-strength bolt having excellent tensile strength according to the present invention; and
FIG. 3 is a transmission electron microscope image of an example of a structure of a bolt manufactured according to the method of manufacturing a high-strength bolt having excellent tensile strength according to the present invention.

### MODE FOR CARRYING OUT THE INVENTION

The foregoing objects, features, and advantages of the present invention will become more readily apparent from the following detailed description related to the accompanying drawings. However, the invention is amenable to various modifications and alternative forms, specific embodiments have been shown by way of example in the drawings and are described in detail below.

In the drawings, the dimensions of layers and regions are exaggerated for clarity of illustration. Like reference numerals refer to like elements throughout.

Moreover, detailed descriptions related to well-known functions or configurations will be ruled out in order not to unnecessarily obscure subject matters of the present invention. Also, the numbers (e.g., "first", "second", etc.) used to describe the present specification are only used to distinguish one component from another.

Hereinafter, the present invention will be described in more detail.

The present inventors recognized that a high-strength bolt may be manufactured by appropriately controlling an alloy composition of steel used in the manufacture of a bolt and conditions of heat treatment processes required for the manufacture of a bolt, thereby leading to the realization of the present invention.

First, an alloy composition of a cold heading quality wire rod designed in the present invention will be described in detail.

### (1) Amount of Carbon (C): 0.3% or more to 0.4% or less

It is desirable to include carbon in an amount of 0.3% to 0.4%. C is an element affecting the strength of a wire rod, wherein the amount thereof may be 0.3% or more to secure sufficient strength. However, when the amount of C is added more than necessary, an increase in the tendency of brittle fracture and reduction of toughness and ductility may occur due to the excessive formation of carbides. Thus, the amount thereof may be limited to 0.4% or less.

### (2) Amount of Silicon (Si): 0.01% or more to 0.1% or less

It is desirable to include Si in an amount of 0.01% to 0.1%. Si, as an element dissolved in a ferrite phase, is very useful for determining the tensile strength of steel. However, when Si is excessively added, it is very effective in increasing the tensile strength of the steel by improving the strength of ferrite. However, a processing load during cold forging tends to be increased due to a strong work-hardening effect (property of hardening as the amount of cold working increases). Thus, the amount of Si may be limited to 0.1% or less in order to address limitations in processability due to rapid work hardening during cold drawing and heading processes. In contrast, in a case where deoxidization is performed mainly using Si in a typical steel making process, since it may be more difficult to control the amount of Si to be 0.01% or less, it may be general to maintain Si in an amount of 0.01% or more. In addition, since appropriate strength required for a product may not be obtained when the amount of Si is excessively low, it is desirable to add Si in an amount of 0.01% or more.

### (3) Amount of Manganese (Mn): 0.4% or more to 0.6% or less

It is desirable to include Mn in an amount of 0.4% to 0.6%. Mn, as an element for solid solution strengthening by forming a substitutional solid solution in a matrix structure, is a useful element able to obtain required strength without a decrease in ductility. Thus, Mn may be added in an amount of 0.4% or more to satisfy the strength required in the present invention, and Mn may be added in an amount of 0.6% or less to prevent excessive segregation and brittleness due to the bonding between Mn and sulfur (S).

### (4) Amounts of Phosphorous (P) and sulfur (S): 0.002% or more to 0.015% or less

P acts as an impurity in most steels and is generally included in an amount of 0.002% or more unless it is purified using a special steel making method. Also, P almost does not have a positive function in an industrial sector to which the present invention is intended to be applied, and P acts as an impurity element that reduces toughness of steel by being mainly segregated in gain boundaries. When P is included in an amount of 0.015% or more, a degree of intergranular segregation increases to significantly reduce toughness or ductility of steel, and thus, the amount of P is limited.

A large amount of S may be added when excellent machining characteristics are required as in free-cutting steel. However, there are many cases in which S is regarded as an impurity in the industrial sector to which the present invention is intended to be applied, and S may have the same effect as P.

According to the above-described reason, P and S may be each included in an amount of 0.015% or less (excluding 0%). Furthermore, since P is a main cause of reducing toughness and cold processability by being segregated at grain boundaries, the upper limit thereof may be limited to 0.015%. That is, when the amount of P is greater than 0.015%, the toughness and cold processability are unnecessarily reduced, and thus, the amount of P may be controlled to be 0.015% or less. Also, since S may adversely affect delayed fracture resistance and stress relaxation characteristics by being segregated at grain boundaries as a low melting point element to reduce toughness and form sulfide, the upper limit thereof may be limited to 0.015%.

### (5) Amount of Chromium (Cr): 0.9% or more to 1.1% or less

Cr may be added in an amount of 0.9% to 1.1%. Cr is a useful element for securing hardenability during tempering. In particular, the improvement of hardenability due to Cr itself may be insignificant. However, it is known that the effect of Cr may be significantly increased when Cr is added with boron.

Sufficient hardenability may not be secured during quenching and tempering when the amount of Cr is less than 0.9%. In the case that the amount of Cr is greater than 1.1%, the addition of Cr may induce the formation of carbides in the form of a film in steel, and it is known that hydrogen delayed fracture resistance is reduced when the carbides in the form of a film exist at austenite grain boundaries. Therefore, it is desirable to control the amount of Cr to be 1.1% or less.

### (6) Amount of Molybdenum (Mo): 0.2% or more to 0.5% or less

An amount of Mo is limited to 0.2% to 0.5%. The reason for this is that in a case where the amount of Mo is less than 0.2%, it may not be sufficient to improve tempering resistance by suppressing the growth of cementite when the cementite is transformed from ε-carbides during tempering and grows or to form carbides for improving delayed fracture resistance. Thus, it is desirable to control the amount of Mo to be 0.2% or more. Also, in the case that the amount of Mo added is greater than 0.5%, it may be very effective to increase tempering resistance, but a low-temperature structure (martensite or bainite) may be easily formed during the manufacture of a wire rod. This may result in the degradation of the characteristics of a product. Therefore, it is desirable to add Mo in an amount of 0.5% or less. Mo, as a strong carbide-forming element, may effectively form carbides during tempering within the above-described limited range. As a result, it is known that Cr may have a secondary hardening effect in which required strength may be obtained even at a relatively high tempering temperature because the degree of decrease in strength during tempering may decrease.

### (7) Amount of Vanadium (V): 0.05% or more to 0.15% or less

V is an element that functions as niobium (Nb) and is added as an element for improving delayed fracture resistance and tempering resistance. In the case that an amount of V is less than 0.05%, the role of V as a non-diffusive hydrogen trap site may be insufficient according to a decrease in the distribution of precipitates, and thus, it may be difficult to expect an effect of improving delayed fracture resistance. Also, since precipitation hardening may not be expected, an effect of improving tempering resistance may be insufficient. Thus, it is desirable to control the amount of V to be 0.05% or more. Also, when the amount of V is greater than 0.15%, since the effects of improving delayed fracture resistance and tempering resistance due to precipitates may be saturated and the amount of coarse alloy carbides, which are not dissolved in a parent material during austenitizing, may be increased to act as non-metallic inclusions, the degradation of fatigue characteristics may occur. Therefore, it is desirable to control the amount of V to be 0.15% or less.

### (8) Amount of Aluminum (Al): 0.02% or more to 0.05% or less

Al is a component added for the purpose of deoxidation and grain refinement caused by aluminum nitride. In the case that an amount of Al is less than 0.02%, an effect due to the addition of Al is insignificant, and thus, it is desirable to control the amount of Al to be 0.02% or more. Also, Al plays an auxiliary role of vanadium carbonitride (V(CN)) and titanium carbonitride (Ti(CN)). In the case that the amount of Al is greater than 0.05%, Al may form coarse aluminum nitride, in addition to above-described positive effects due to the addition of Al, to adversely affect fatigue characteristics. Therefore, it is desirable to limit the amount of Al to 0.05% or less.

### (9) Amount of Nickel (Ni): 0.2% or more to 0.5% or less

Ni is an element that forms a nickel-enriched layer on the surface of a steel during a heat treatment to suppress the permeation of external hydrogen and improve delayed fracture resistance. In the case that an amount of nickel is less than 0.2%, an effect of improving delayed fracture resistance may not be expected because the formation of the surface-enriched layer may be incomplete, and also, there is no effect of improving cold processability during cold working. Thus, it is desirable to control the amount of Ni to be 0.2% or more. Also, when the amount of Ni is greater than 0.5%, the amount of residual austenite after the heat treatment may increase to reduce impact toughness. Thus, the amount of Ni may be limited to 0.5% or less.

### (10) Amount of Copper (Cu): 0.1% or less

In general, Cu does not form a compound in steel but is dissolved therein when Cu is added in a small amount. However, it is known that Cu has a tendency of clustering, in which Cu atoms agglomerate each other, and causes surface cracks during hot rolling at high temperature to adversely affect the occurrence of surface defects. In the case that the amount of Cu is greater than 0.1%, such adverse effects may occur, and thus, it is desirable to limit the amount of Cu to 0.1% or less.

### (11) Amount of Titanium (Ti): 0.01% or more to 0.05% or less

Ti is combined with nitrogen in steel to form titanium nitride. The titanium nitride may improved impact toughness of steel by suppressing the growth of austenite grains during a reheating process before forging. In the case that an amount of Ti is less than 0.01%, since the absolute amount of Ti is small, it may be difficult to effectively suppress the grain growth. Thus, it is desirable to control the amount of Ti to be 0.01% or more. Since the effects of Ti may be saturated when the amount of Ti exceeds a predetermined amount, there is no need to excessively add an expensive alloying element. Therefore, it is desirable to limit the amount of Ti to 0.005% or less.

### (12) Amount of Boron (B): 0.001% or more to 0.005% or less

B is a grain boundary strengthening element for improving hardenability and delayed fracture resistance in the present invention, wherein an amount of B may be added in a range of 0.001% to 0.005%. In the case that the amount of B is less than 0.001%, an effect of improving grain boundary strength or an effect of improving hardenability due to the gain boundary segregation of B atoms during a heat treatment may be insufficient. In the case in which the amount of B is greater than 0.005%, the effects due to the addition of B may be saturated, and grain boundary strength and impact toughness may decrease due to the precipitation of boron nitrides. Thus, it is desirable to control the amount of B to be in a range of 0.001% or more to 0.005% or less.

### (13) Amount of Nitrogen (N): 0.005% or more to 0.02% or less

N may form nitrides by being combined with V, Ti, and Al in steel. When an amount of N is less than 0.005%, the sufficient amount of nitrides may not be formed. When the amount of N is greater than 0.020%, the amount of dissolved N may increase to reduce toughness. Thus, it is desirable to limit the amount of N in a range of 0.005% or more to 0.020%.

### (14) Amount of Oxygen (O): 0.005% or less

It is desirable to control an amount of O to be 0.005% or less. The reason for this is that in the case that the amount of O is greater than 0.005%, fatigue life may be reduced due to oxide-based non-metallic inclusions.

The alloy composition may include iron (Fe) as well as other unavoidable impurities as a remainder. The wire rod used in the method according to the embodiment of the present invention does not exclude the inclusion of other elements in addition to the above-described composition.

Hereinafter, a method of austenitizing, quenching, and tempering, which is performed to form a bolt in a typical shape by using a cold heading quality wire rod and obtain required tensile strength, will be described in detail. Since the method proposed in the present invention is related to a method of improving mechanical properties of a final bolt product, a detailed method of cold forging a cold heading quality wire rod and a method of thread rolling will not be described, but a general manufacturing method will be described. In other words, the present invention does not limit a particular shape of a bolt and methods of cold forging and thread rolling.

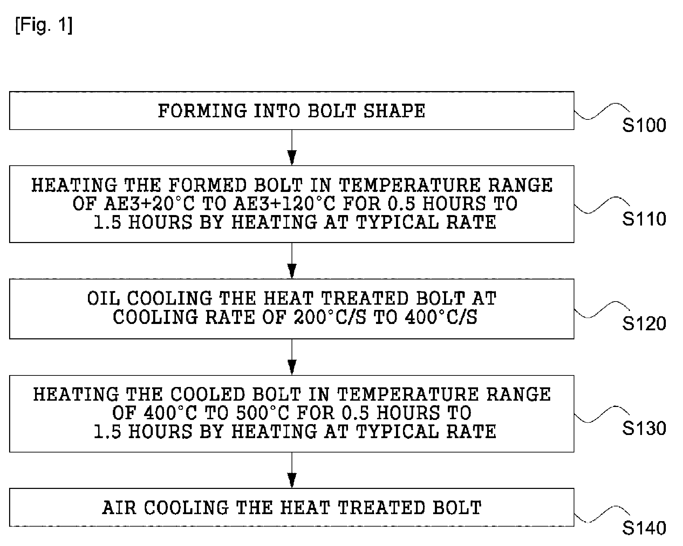

FIG. 1 is a flowchart illustrating a method of manufacturing a high-strength bolt according to an embodiment of the present invention.

Referring to FIG. 1, the method of manufacturing a high-strength bolt according to the embodiment of the present invention includes the steps of: forming a shape of a bolt using a cold heading quality wire rod having the above-described alloy composition (S100); performing a first heat treatment in a temperature range of Ae3+20°C to Ae3+120'C for 0.5 hours to 1.5 hours by heating at a typical rate (S110); performing oil cooling at a cooling rate of 200°C/s to 400°C/s (S120); performing a second heat treatment in a temperature range of 400°C to 500°C for 0.5 hours to 1.5 hours by heating at a typical rate (S130); and air cooling the second heat-treated bolt (S140). Hereinafter, each step will be described in more detail.

The shape of a bolt is formed (S100). Processes, such as cold forging and thread rolling, may be performed to form the shape of a bolt. A method of forming the shape of a bolt may be performed by a typical method and the present invention is not limited to a particular forming method.

The bolt formed in step S100 is heated in a temperature range of Ae3+20°C to Ae3+120°C for 0.5 hours to 1.5 hours by heating at a typical rate (S110).

In the above method, Ae3 temperature denotes an austenite ↔ austenite+ferrite equilibrium transformation temperature that is obtained by thermodynamic calculation or experiment.

According to the method of manufacturing a high-strength bolt according to the present invention, the bolt formed in step S100 is heat treated in a temperature range of Ae3+20°C to Ae3+120°C.

In the case that the heat treatment temperature is less than Ae3+20°C, since the heat treatment temperature is close to the transformation temperature due to temperature variations, a uniform microstructure may be difficult to be obtained. Furthermore, since the heat treatment is performed in a state of two microstructures of austenite + ferrite instead of a single phase, martensite may not be effectively obtained.

In contrast, in the case in which the heat treatment temperature is greater than Ae3+120°C, gain growth may be promoted due to the high temperature to form coarse austenite, and thus, toughness and ductility may be reduced.
According to the method of manufacturing a high-strength bolt according to the present invention, the bolt formed in step S100 is heat treated for 0.5 hours to 1.5 hours within the above-described temperature range.

In the case that the heat treatment time is less than 0.5 hours, complete austenitizing of a typical material, i.e., transformation into a single phase, may not be fully completed, and also, a uniform temperature distribution over the entire material may not be ensured. Thus, the heat treatment time may be controlled to be 0.5 hours or more.

Also, in the case in which the heat treatment time is greater than 1.5 hours, the reduction of toughness and ductility of the final product may be caused by coarse austenite grains, and thus, the heat treatment time may be controlled to be 1.5 hours or less.

Since a method of increasing the temperature to a temperature required for the heat treatment of step 110 and/or a heating rate may not significantly affect the strength of the bolt according to the present invention, the present invention may be used regardless of a particular method of increasing the temperature of the formed bolt and/or a particular heating rate.

The bolt heat treated according to step S110 is oil cooled at a cooling rate of 200°C/s to 400°C/s (S120).

According to step S110, very hard martensite necessary for tempering may be formed.

In the case that the cooling rate is less than 200°C/s, since soft microstructures, such as ferrite and pearlite or bainite, may be formed during the cooling, the effects of the present invention may not be fully realized. Therefore, it is desirable to obtain martensite at a high cooling rate of 200°C/s or more.

Also, in the case in which the cooling rate is greater than 400°C/s, quenching cracks or distortion of a heat treatment workpiece may occur due to the high cooling rate. Thus, the cooling rate may be controlled to be 400°C/s or less. Also, the cooling rate of 400°C/s is difficult to be obtained by a typical method.

Furthermore, typical cooling oil may be used as cooling oil in the present method, and the temperature at which an effect of the typical cooling oil is fully obtained may be used as the temperature of the cooling oil. For example, the constant temperature of the cooling oil used may be maintained in a range of 50°C to 80°C.

The bolt cooled in step S120 is heated in a temperature range of 400°C to 500°C for 0.5 hours to 1.5 hours by heating at a typical rate (S130).

In the case that the heat treatment temperature is less than 400°C, carbides formed as martensites may be formed at grain boundaries and accordingly, brittleness may occur to rapidly reduce the ductility of a material. Thus, the heat treatment temperature may be 400°C or more.

In the case in which the heat treatment temperature is greater than 500°C, since the size of carbides formed may increase, a product having excellent ductility may be obtained. However, since the degree of tempering may increase, required tensile strength may not be obtained. Thus, the heat treatment temperature may be 500°C or less.

In the case that the heat treatment time is less than 0.5 hours, since a uniform temperature distribution of the material may not be obtained, it is desirable to control the heat treatment time to be 0.5 hours or more.

In the case in which the heat treatment time is greater than 1.5 hours, since the size of carbides formed may be increased to increase the degree of tempering similar to the above-described effect occurred when the heat treatment temperature is increased, required tensile strength may not be obtained. Therefore, the heat treatment time may be 1.5 hours or less.

The bolt heat treated in step S130 is air cooled (S140).

An air cooling method in step S140 may be performed by a typical method that is not particularly limited.

As described above, when a bolt is manufactured according to the method of manufacturing a high-strength bolt having excellent tensile strength according to the present invention, the bolt may have a tempered martensite structure and a carbide structure including at least one selected from the group consisting of V, Ti, and Fe.

In this case, an area fraction of the tempered martensite structure may be 98% or more.

FIG. 2 illustrates an example of a microstructure of a bolt manufactured according to the method of manufacturing a bolt according to the present invention.

An average particle diameter of the carbide structure including at least one selected from the group consisting of V, Ti, and Fe may be in a range of 0.1 µm to 1 µm.

In the case that the diameter of carbides is very small as in the case of less than 0.1 µm, tensile strength may be improved, but ductility and toughness may be reduced. In contrast, in the case in which the diameter of carbides is greater than 1 µm, since coarse carbides, which reduce resistance to hydrogen embrittlement and also degrade fatigue characteristics, may be formed to decrease tensile strength, the effects desired in the present invention may not be realized. Thus, the average particle diameter of the carbide structure may be in a range of 0.1 µm to 1 µm. Also, coarse cementite may exhibit adverse effects that reduce the resistance to hydrogen embrittlement and also degrade the fatigue characteristics.

FIG. 3 illustrates a transmission electron microscope image of an example of a structure of a bolt manufactured according to the method of manufacturing a high-strength bolt having excellent tensile strength according to the present invention.

Hereinafter, examples of the present invention will be described in detail. However, the following examples are merely provided to allow for a clearer understanding of the present invention, rather than to limit the scope of the present invention.

A steel used in the following examples had a targeted alloy composition and was processed into the form of a wire rod suitable for cold heading and manufacturing a bolt by hot rolling of 30 kg of a vacuum-melted ingot. A bolt had a general shape with a length of 50 mm and a hexagonal head diameter of 8 mm. The bolt was formed into the above shape by cold forging and thread rolling, and was subjected to heat treatments proposed in the present invention. Then, mechanical properties and microstructures were investigated, and the results thereof are presented in the examples.

### (Example 1)

Compositions of various inventive materials and comparative materials used in the design of the present invention are listed in Table 1. In all cases, amounts of P, S, Cu, N, and O were controlled to be within ranges limited in the present invention, that is, P: 0.015% or less, S: 0.015% or less, Cu: 0.1% or less, N: 0.005% to 0.020%, and O: 0.005% or less, and the effects thereof were already described above.

Inventive Materials 1 to 5 had alloy compositions all satisfying conditions defined in the present invention. However, with respect to Comparative Material 1, the amount of C was higher than the preferred range, and with respect to Comparative Material 2, the amount of C was lower than the preferred range. Comparative Material 3 was a case in which Si was not added, Comparative Material 4 was a case in which the amount of Mn was lower, Comparative Material 5 was a case in which the amount of Cr was lower, Comparative Material 6 was a case in which the amount of Mo was lower, and Comparative Material 7 was a case in which the amount of B was lower. In the case that each alloy composition other than the above composition was outside the preferred range, since the each alloy composition may adversely affect in terms of other aspects different from tensile strength which is interested in the present invention, the each alloy composition was not used as a comparative material. The reason for limiting the composition was described in detail above.

**[Table 1]**

| **Category** | **C** | **Si** | **Mn** | **Cr** | **Mo** | **V** | **Ni** | **Al** | **Ti** | **B** |
|---|---|---|---|---|---|---|---|---|---|---|
| Inventive Material 1 | 0.31 | 0.05 | 0.41 | 0.92 | 0.23 | 0.05 | 0.20 | 0.02 | 0.01 | 0.002 |
| Inventive Material 2 | 0.33 | 0.03 | 0.43 | 0.98 | 0.26 | 0.09 | 0.29 | 0.02 | 0.02 | 0.003 |
| Inventive Material 3 | 0.33 | 0.06 | 0.45 | 0.99 | 0.31 | 0.12 | 0.30 | 0.03 | 0.03 | 0.003 |
| Inventive Material 4 | 0.35 | 0.09 | 0.55 | 1.00 | 0.39 | 0.11 | 0.32 | 0.03 | 0.03 | 0.004 |
| Inventive Material 5 | 0.38 | 0.05 | 0.58 | 1.05 | 0.48 | 0.13 | 0.48 | 0.05 | 0.04 | 0.003 |
| Comparative Material 1 | 0.43 | 0.06 | 0.43 | 0.99 | 0.23 | 0.09 | 0.30 | 0.02 | 0.02 | 0.003 |
| Comparative Material 2 | 0.13 | 0.09 | 0.45 | 1.00 | 0.26 | 0.12 | 0.32 | 0.02 | 0.03 | 0.002 |
| Comparative Material 3 | 0.35 | - | 0.55 | 1.05 | 0.31 | 0.15 | 0.48 | 0.03 | 0.03 | 0.004 |
| Comparative Material 4 | 0.36 | 0.06 | 0.23 | 1.02 | 0.39 | 0.13 | 0.29 | 0.04 | 0.05 | 0.003 |
| Comparative Material 5 | 0.39 | 0.09 | 0.52 | 0.5 | 0.48 | 0.12 | 0.30 | 0.02 | 0.02 | 0.003 |
| Comparative Material 6 | 0.36 | 0.06 | 0.56 | 0.99 | 0.12 | 0.11 | 0.32 | 0.03 | 0.03 | 0.004 |
| Comparative Material 7 | 0.32 | 0.03 | 0.49 | 0.98 | 0.39 | 0.13 | 0.30 | 0.05 | 0.03 | - |

In Table 2, results of performing the heat treatment method designed in the present invention on the alloy compositions listed in Table 1 are presented. Ae3 temperature listed in the second column of Table 2 denotes results of thermodynamic calculation for the given composition.

It may be understood that Inventive Materials 1 to 5 exhibited desirable mechanical properties having a tensile strength of 1,300 MPa to 1,500 MPa and an elongation of 12% to 15% which were intended in the present invention. Also, it may be understood that ranges of the alloy composition designed in the present invention were very effective. However, with respect to Comparative Materials 1 to 7, since their alloy compositions were outside the ranges, properties intended in the present invention were not obtained even in the case in which the heat treatment conditions were appropriately performed as described above. Thus, it may be understood that the amounts of the alloy components designed by the present inventors were suitable and the effects thereof were effective in the improvement of tensile strength.

**[Table 2]**

| **Category** | **Ae3 (°C)** | **Heating temperature(°C)** | **Heating time (hr)** | **Cooling rate (°C/s)** | **Heating temperature(°C)** | **Heating time (hr)** | **Tensile strength (MPa)** | **Elongation (%)** |
|---|---|---|---|---|---|---|---|---|
| Inventive Material 1 | 826 | 896 | 1.5 | 235 | 480 | 1.5 | 1390 | 12 |
| Inventive Material 2 | 812 | 882 | 1.3 | 270 | 460 | 1.3 | 1420 | 13 |
| Inventive Material 3 | 819 | 889 | 1.5 | 302 | 480 | 1.2 | 1410 | 14 |
| Inventive Material 4 | 802 | 872 | 1.2 | 295 | 480 | 1.3 | 1480 | 12 |
| Inventive Material 5 | 823 | 893 | 1.0 | 356 | 470 | 1.0 | 1350 | 15 |
| Comparative Material 1 | 814 | 884 | 1.1 | 287 | 475 | 0.9 | 1560 | 8 |
| Comparative Material 2 | 798 | 868 | 1.3 | 298 | 495 | 1.2 | 1100 | 25 |
| Comparative Material 3 | 809 | 879 | 1.5 | 215 | 465 | 0.8 | 1120 | 21 |
| Comparative Material 4 | 806 | 876 | 1.5 | 265 | 450 | 1.2 | 1099 | 20 |
| Comparative Material 5 | 817 | 887 | 1.5 | 239 | 423 | 1.1 | 1055 | 21 |
| Comparative Material 6 | 806 | 876 | 1.3 | 332 | 412 | 1.3 | 1002 | 22 |
| Comparative Material 7 | 821 | 891 | 1.5 | 395 | 432 | 1.5 | 998 | 23 |

### (Example 2)

In Table 3, results of comparing mechanical properties of final bolts using Inventive Materials 1 to 5 having desirable alloy compositions of Table 1 under different conditions of heating temperature, heating time, or the like are presented. Inventive Materials 1-1 and 1-2 corresponded to cases in which the heating temperature was changed when Inventive Material 1 was used, Inventive Material 2-1 corresponded to a case in which the heating time was increased when Inventive Material 2 was used, and Inventive Materials 3-1 and 3-2 corresponded to cases in which the cooling rates, which were outside the range proposed as above, were compared. Inventive Materials 4-1 and 4-2 corresponded to cases in which the heating temperature after quenching was outside the range, and Inventive Material 5-1 corresponded to a case in which the heating time of tempering was long and outside the range.

Impact toughness values of Inventive Materials 1 to 5, which were desirably considered in the present invention, were listed in the last column of Table 3, wherein it may be most preferable to obtain the impact toughness value of 35 J to 50 J, and this may indicate that toughness and ductility were improved by the present invention similar to the case in which a value of elongation was obtained in a range of 12% to 15%.

As described above, appropriate values of tensile strength, elongation, and impact toughness were not obtained when the conditions were outside the appropriate ranges of the method designed in the present invention. Inventive Materials 1-1 to 4-1 all indicated undesirable mechanical property values of the final bolts. With respect to Inventive Material 3-2, since the material was broken due to the excessive cooling rate, it was impossible to obtain mechanical property values.

**[Table 3]**

| **Category** | **Ae3 (°C)** | **Heating temperature(°C)** | **Heating time (hr)** | **Cooling rate (°C/s)** | **Heating temperature(°C)** | **Heating time (hr)** | **Tensile strength (MPa)** | **Elongation (%)** | **Impact toughness (%)** |
|---|---|---|---|---|---|---|---|---|---|
| Inventive Material 1 | 826 | 896 | 1.5 | 235 | 480 | 1.5 | 1390 | 12 | 36 |
| Inventive Material 2 | 812 | 882 | 1.3 | 270 | 460 | 1.3 | 1420 | 13 | 41 |
| Inventive Material 3 | 819 | 889 | 1.5 | 302 | 480 | 1.2 | 1410 | 14 | 39 |
| Inventive Material 4 | 802 | 872 | 1.2 | 295 | 480 | 1.3 | 1480 | 12 | 46 |
| Inventive Material 5 | 823 | 893 | 1.0 | 356 | 470 | 1.0 | 1350 | 15 | 46 |
| Inventive Material 1-1 | 826 | 830 | 0.9 | 256 | 480 | 1.2 | 856 | 32 | 86 |
| Inventive Material 1-2 | 826 | 960 | 1.2 | 298 | 480 | 1.5 | 1380 | 5 | 9 |
| Inventive Material 2-1 | 812 | 884 | 2.5 | 321 | 481 | 1.1 | 1410 | 5 | 6 |
| Inventive Material 3-1 | 812 | 884 | 1.5 | 15 | 483 | 1.4 | 860 | 36 | 71 |
| Inventive Material 3-2 | 819 | 891 | 1.2 | 530 | 492 | 1.2 | - | - | - |
| Inventive Material 4-1 | 802 | 874 | 1.5 | 365 | 260 | 1.3 | 1520 | 1 | 5 |
| Inventive Material 4-2 | 802 | 874 | 1.1 | 287 | 610 | 1.5 | 960 | 18 | 62 |
| Inventive Material 5-1 | 823 | 895 | 1.4 | 291 | 488 | 2.5 | 1463 | 13 | 12 |

In particular, with respect to Inventive Material 4-1, the microstructure thereof was composed of 98% or more of tempered martensite and carbides due to a low tempering temperature. However, it was observed that very fine carbides having an average particle diameter of 0.1 µm or less were formed to significantly reduce ductility and toughness. In contrast, with respect to Inventive Material 4-2, since the growth rate of carbides was increased due to high tempering temperature, the average particle diameter was increased to about 5 µm. Accordingly, it may be understood that tensile strength was significantly decreased.

In contrast, Inventive Materials 1 to 5, which processed under very desirable conditions, satisfied all of the desired conditions in the present invention to obtain carbides having an appropriate average particle diameter as illustrated in FIG. 3. Thus, it may be understood that desirable mechanical properties were realized.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A method of manufacturing a high-strength bolt, the method comprising:
forming an alloy wire rod in a shape of a bolt, which has a two-phase structure of ferrite-pearlite and includes 0.3 wt% to 0.4 wt% of carbon (C), 0.1 wt% or less of silicon (Si), 0.4 wt% to 0.6 wt% of manganese (Mn), 0.9 wt% to 1.1 wt% of chromium (Cr), 0.2 wt% to 0.5 wt% of molybdenum (Mo), 0.05 wt% to 0.15 wt% of vanadium (V), 0.02 wt% to 0.05 wt% of aluminum (Al), 0.2 wt% to 0.5 wt% of nickel (Ni), 0.015 wt% or less of phosphorous (P), 0.015 wt% or less of sulfur (S), 0.1 wt% or less of copper (Cu), 0.01 wt% to 0.05 wt% of titanium (Ti), 0.001 wt% to 0.005 wt% of boron (B), 0.005 wt% to 0.020 wt% of nitrogen (N), 0.005 wt% or less of oxygen (O), and iron (Fe) as well as other unavoidable impurities as a remainder;
performing a first heat treatment on the formed bolt in a temperature range of Ae3+20°C to Ae3+120°C;
cooling the heat-treated bolt at a cooling rate of 200°C/s to 400°C/s; and performing a second heat treatment on the cooled bolt in a temperature range of 400°C to 500°C,
wherein the second heat-treated bolt has a tempered martensite structure and a carbide structure including at least one selected from the group consisting of V, Ti, and Fe.

2. The method of claim 1, wherein the first heat treatment is performed for 0.5 hours to 1.5 hours.

3. The method of claim 1, wherein the second heat treatment is performed for 0.5 hours to 1.5 hours.

4. The method of claim 1, wherein the cooling is performed by oil cooling.

5. The method of claim 1, further comprising an air cooling the second heat treated bolt.

6. The method of claim 1, wherein the area fraction of the tempered martensite structure is 98% or more.

7. The method of claim 1, wherein an average particle diameter of the carbide structure including at least one selected from the group consisting of V, Ti, and Fe is in a range of 0.1 µm to 1 µm.
